# EUROPEAN PATENT SPECIFICATION

(11) **EP 3 925 933 B1**
(45) Date of publication and mention of the grant of the patent: **06.12.2023**
(21) Application number: 20180064.6
(22) Date of filing: 15.06.2020
(51) Int. Cl.: C02F 1/40, C02F 3/32, C02F 101/32

(54) **PLANT AND METHOD FOR TREATMENT OF WASTE WATER**
ANLAGE UND VERFAHREN ZUR AUFBEREITUNG VON ABWASSER
INSTALLATION ET PROCÉDÉ POUR LE TRAITEMENT D'EAUX USÉES

(43) Date of publication of application: 22.12.2021
(73) Proprietor: Bauer Resources GmbH, 86529 Schrobenhausen (DE)
(72) Inventor: Appiah, Daniel, P.C. 114, Al Mina, Muscat (OM); Headley, Tom, P.C. 114, Al Mina, Muscat (OM); Polverini, Dario, P.C. 114, Al Mina, Muscat (OM); Prigent, Stephane, P.C. 114, Al Mina, Muscat (OM); Breuer, Roman, 86529 Schrobenhausen (DE)
(74) Representative: Wunderlich & Heim Patentanwälte Partnerschaftsgesellschaft mbB

(56) References cited:
- CN-B- 104 591 398
- KR-A- 20060 008 138
- US-A1- 2011 272 349

## Description

The invention relates to a plant for treatment of waste water containing oil, comprising a feeding duct for supplying the waste water, a constructed wetland area having at least one constructed wetland basin with wetland plants for treating the water flowing through the constructed wetland basin in a longitudinal direction, wherein the constructed wetland basin comprises a fundamentally rectangular shape with longitudinal sides in the longitudinal direction and broad sides in a transverse direction, according to the preamble of claim 1.

Furthermore, the invention relates to a method for treatment of waste water, in particular water containing oil, with the steps of supplying the waste water by a feeding duct to a constructed wetland area, flowing the water through the constructed wetland area having at least one constructed wetland basin with wetland plants in a longitudinal direction, wherein the basin comprises a fundamentally rectangular shape with longitudinal sides in a longitudinal direction and broad sides in a transverse direction, according to the preamble of claim 11.

For example, in the oil production industry, oil extracting facilities generate considerable quantities of water contaminated with oil residues and containing high proportions of salt, so called "produced water", which is also referred to as process water and stems from exploitation of crude oil and gas. The safe and environmentally friendly disposal of this produced water poses a fundamental problem, especially in countries located in arid climatic zones, where the contamination of scarce drinking water resources is to be prevented by all means.

Globally, approximately 40 million m³ of produced water are generated each day from oil and gas fields with approximately 40% of this discharged to the environment. This water can be contaminated with petroleum oils, phenols, emulsifiers and a large diversity of metal ions in variable concentrations. Moreover, the water has a relatively high salt content. Commonly practiced methods of disposal into deeper lying water-bearing strata and the injection into aquifers no longer satisfy the continuously growing demands of environmental regulations. In addition, these measures require high costs to provide the necessary energy for which reason they are very inefficient from an economical viewpoint. What is more, in this way an enormous amount of potentially reusable water, a precious entity particularly in desert regions, for the irrigation of agriculturally deployed regions or for the supply of drinking water for the population is lost.

A treatment plant and method of the related art is known from EP 2 213 629 B1. Such a treatment plant is successfully in use in the Sultanate of Oman and using several constructed wetland basins with aquatic plants. For reducing the oil content in the water by the action of microorganisms and plants, the water to be treated is flowing through the constructed wetland basin.

WO 2009/00845 A1 discloses a plant and a respective method for the treatment of produced water from an oil well facility. The produced water is separated in an oil-water separator in a crude oil fraction and in a fraction of produced water. Subsequently, at least a fraction of produced water is fed into an irrigation system with a cascade of soil beds for biological purification and reduction of the crude oil and metals content.

CN 104 591 398 B discloses an installation for cleaning water bodies of urban lakes from eutrophic substances, such as nitrogen or phosphorus based pollution, which do not contain any oil residues emanating from oil extracting facilities. This installation is regarded unsuitable for the claimed purpose. The disclosed "treatment zone" does not comprise a calming zone enabling the treatment of water containing oil. The disclosed "settling zone" which is installed transverse to the flow direction upstream and separate of the treatment zone which is surrounded by the bamboo retaining wall. On the bottom of said settling zone a pipe with perforations for collecting substances is installed.

Water overflowing the settling zone enters the treatment zone downstream of the settling zone and presumably above the bamboo retaining wall. Solids settling at the bottom of the settling zone are collected by a pipe and solids at the bottom of the treatment zone are collected by a further pipe system. The collected matter is then transferred outside of the water treatment system. The type of aggregates being treated here (eutrophic substances based on nitrogen or phosphorus) completely differs from "oil residues" of the current invention. The water flow through the settling and treatment zone completely differs from the present invention and is unsuitable for the treatment of water including oil. Water containing oil would simply overflow the settling and treatment zones, due to the lower specific weight of the oil substances. Another comparable installation for the treatment of urban water bodies is known from KR 2006 0 008 138 A.

There is a tendency of the water to flow along certain ways through the constructed wetland basins leading to strong local flows within the constructed wetland. This could harm the wetland plants and the soil structure in the constructed wetland. Further, the overall cleaning efficiency of the treatment plant can be reduced.

The invention is based on the **object** to provide a plant and method for the treatment of waste water, in particular produced water, providing a high cleaning efficiency.

The invention solves this object by a plant for treatment of waste water having the features in accordance with claim 1 and by a method for the treatment of waste water having the features in accordance with claim 11. Advantageous embodiments of the invention are stated in the dependent claims.

The inventive plant for treatment of waste water is characterized in that at least one constructed wetland basin comprises at least one calming zone along at least one of the broad sides of at least one constructed wetland basin, the calming zone being deeper than an adjacent wetland zone containing the wetland plants.

According to an aspect of the invention, at least one constructed wetland basin is provided having a calming zone at its head portion and/or its end portion. The calming zone is an area of the basin which is deeper than the adjacent wetland zone containing the wetland plants. The calming zone is elongated along the broad side and forms a kind of a channel.

If water to be treated flows into the constructed wetland basin in the calming zone, due to the greater depth compared to the following wetland zone, the velocity of the water flow is reduced compared to the velocity of flow in the wetland zone. This reduced velocity in the calming zone allows the water to flow in a transverse direction along the broad side leading to a certain intermixing of the water to be treated in the calming zone. Consequently, the stream of water flowing into the constructed wetland basin from one or more inlet ducts is equalized along the broad side of the constructed wetland basin achieving a more uniform distribution of the water flow across the breadth of the wetland basin. Consequently, the occurrence of local high velocities of flow with a negative influence on the soil structure and the plants can be avoided. The inflow of water is more gentle for the soil structure and the wetland plants, thus leading to reduced maintenance and enhanced growth by the wetland plants.

Furthermore, the occurrence of significant short-circuit ways of water flow through the constructed wetland basin is reduced in a high degree.

According to a further development of the invention, the calming zone is arranged at an upstream inlet portion and/or at a downstream outlet portion of the at least one constructed wetland basin. If the calming zone is arranged at an outlet portion, a similar effect as described above will be achieved. As the velocity of the flow of water is reduced due to the higher depth in the calming zone, a more equalized stream of water from the wetland zone to the calming zone and from the calming zone to an outlet is enabled. This allows a better and equalized flow of water through the wetland zone with the wetland plants, preserving the soil structure and the constructed wetland plants.

In general, the plant for treatment of waste water can comprise only a single constructed wetland basin with the calming zone according to the invention. According to a preferred embodiment of the invention, the constructed wetland area comprises a plurality of constructed wetland basins being arranged in parallel and/or in series. There could be a single row transversely to the direction of flow or along the direction of flow. More preferably, the constructed wetland area comprises a matrix of a plurality of constructed wetland basins allowing several possibilities of a controlled flow of water. By such a plant for treatment of waste water various quantities of water can be reliably treated.

In general, the ground of the wetland zone may have a certain slope from the inlet to the outlet. A more gentle flow of water within a constructed wetland basin is preferred according to another embodiment of the invention in that the wetland zone comprises at least two serial wetland terraces being arranged with different ground levels, and between two adjacent wetland terraces an intermediate calming zone is arranged, the intermediate calming zone being deeper than the two adjacent wetland terraces. More preferably, the ground level of each wetland terrace is arranged to be without slope (level). By this stepped arrangement of the wetland zone, a particular gentle flow of the water through the wetland zone and the wetland plants is achieved. By this stepped or terraced arrangement, a depth of water suitable for wetland vegetation growth can be maintained within the wetland zones, even at very high flow rates. The wetland terraces are stepping down from the inlet to the outlet.

For systems comprising a plurality of parallel constructed wetland basins, a useful distribution of the water within the plant for treatment of waste water is achieved according to another embodiment of the invention in that the feeding duct leads to a centralized weir gate, from which the water is guided to the constructed wetland basins by a distribution system. In particular the distribution system comprises distribution channels being connected with the constructed wetland area. The distribution system may comprise open channels or closed ducts for guiding the water to certain constructed wetland basins. By appropriate control means, like weirs, the amount of water flowing to each constructed wetland basin can be controlled, allowing in particular an equalized distribution of the water between the number of basins or, if necessary, a stop of inflow in a certain basin for maintenance of the basin.

According to a further embodiment of the invention, it is preferred that in an arrangement of a plurality of constructed wetland basins lateral distribution ducts are provided in the direction of flow and/or transverse to the direction of flow for enabling an equal distribution and an interchange of the water between the individual constructed wetland basins. In particular, the constructed wetland area comprises a matrix of constructed wetland basins, each basin being directly connected to the distribution system. Thus, it is possible to provide a bypass of certain basins and to establish a controlled inflow and outflow of certain basins in the constructed wetland area. This enables flexible operation to allow maintenance to be conducted on the constructed wetland basins.

For reaching an equal quality of the treated water, it is furthermore preferred that at least one distribution channel is designed as an interchange channel collecting and mixing the outflow of several parallel constructed wetland basins. Such a distribution channel is preferably arranged transversely to the flow of direction and connected to several constructed wetland basins. From this distribution channel, the water is mixed and then guided to several other constructed wetland basins on which the mixed and interchanged treated water is distributed.

Another advantageous point is achieved in that at least one channel with at least one means for skimming oil from the surface of the water at a defined position along the channel is provided, wherein upstream of it, at least one underwater bund is arranged transversely to the direction of flow. The underwater bund is adapted to locally reduce the cross section of the channel and to locally increase the velocity of flow. This channel is preferably arranged as an initial conveyance channel with a calming zone of low kinetic energy before and after the underwater bund, wherein the water can be initially treated. By the specific design with an underwater bund in front of at least one skimming means, enough energy or inertia in the flow is created to break the water surface tension of the oil droplets through collision. Hence allowing the oil droplets to coalesce into larger droplets, facilitating flotation and formation of an oil blanket at the surface of the water after the bund where the kinetic energy is much lower. This oil blanket can be skimmed from the water by skimming means. Furthermore, the use of underwater bunds may change the flow form a subcritical to a supercritical flow. It is important that no hydraulic jump is created, which would emulsify the oil droplets again. The aim is to break the water surface tension of the oil droplets which will allow the oil droplets to coalescence and form an oil blanket immediate after the underwater bund, at the interface point of a calming zone. Thus, an efficient first mechanical cleaning or treatment step of the water can be carried out.

This hydrologic treatment step is further enhanced according to an embodiment of the invention in that downstream of the skimming means at the surface of the water a baffle for forming and accumulating a floating blanket of oil is arranged. The baffle at the surface of the water has a certain depth to stop and accumulate the oil droplets on the surface of the water. Thus, a blanket of oil is created which can reliably be skimmed-off by the skimming means.

In particular, downstream of the underwater bund, where an oil blanket can form, a baffle is arranged to retain the oil blanket, and between the underwater bund and the baffle the skimming means is arranged to remove accumulated oil.

The inventive method for treatment of waste water according to the invention is characterized in that the at least one constructed wetland basin comprises at least one calming zone along at least one broad side of the at least one constructed wetland basin, the calming zone being deeper than the adjacent wetland zone with the wetland plants, wherein the velocity of flow of water is reduced in the calming zone.

The inventive method can be carried out by the plant or device as described above. Accordingly, the respective effects and advantages can be achieved.

According to a variant of the inventive method, it is preferred that the velocity of flow is reduced by a first calming zone at an upstream inlet portion of the constructed wetland basin. Consequently, high local velocities of flow in the constructed wetland basin and the following wetland zone can be avoided. A gentle and equal inflow of water into the wetland zone is achieved. This preserves the soil structure and the wetland plants in the wetland zone.

A gentle and equal flow in the wetland zone is enhanced according to another variant of the inventive method in that the wetland zone comprises at least two serial wetland terraces being arranged with different ground levels, wherein the flow of water between both terraces is reduced by an intermediate calming zone between the terraces, wherein the intermediate calming zone is deeper than the two adjacent wetland terraces. The intermediate calming zone can be designed as a channel, which leads to similar effects as described with the calming zone in the head or inlet section and the end section of the constructed wetland area.

Furthermore, a defined distribution of water can be achieved in that a plurality of constructed wetland basins with lateral distribution ducts are provided in the direction of flow and/or transverse to the direction of flow, by which the water can equally be distributed and interchanged between the individual constructed wetland basins.

According to another further development of the invention, the method comprises the steps of providing a stream of water to be treated in an elongated channel, skimming oil from the surface of the water at least one defined position along the channel by at least one skimming means, and locally increasing the velocity of flow by an underwater bund being arranged transversely to the direction of flow in front of the at least one skimming means in the direction of flow, wherein droplets of oil in the water are collided and coalesced for forming a floating blanket of oil at the surface of the water. In this method, in a first step of treatment, a blanket of oil of the surface of the water can be created. This blanket of oil can easily be skimmed off by usual skimming means. With this first pre-treatment step, a significant reduction of the oil content can be reached.

The invention is further described in connection with preferred embodiments being shown in the enclosed drawings. The drawings are showing in
- fig. 1: a schematic plan view of a part of an inventive plant;
- fig.2: a further schematic plan view of a part of an inventive plant;
- fig. 3: a cross section of the part of an inventive plant of fig. 2;
- fig. 4: a plan view on a skimming channel for an inventive plant; and
- fig. 5: a schematic cross section of the skimming channel of fig. 4.

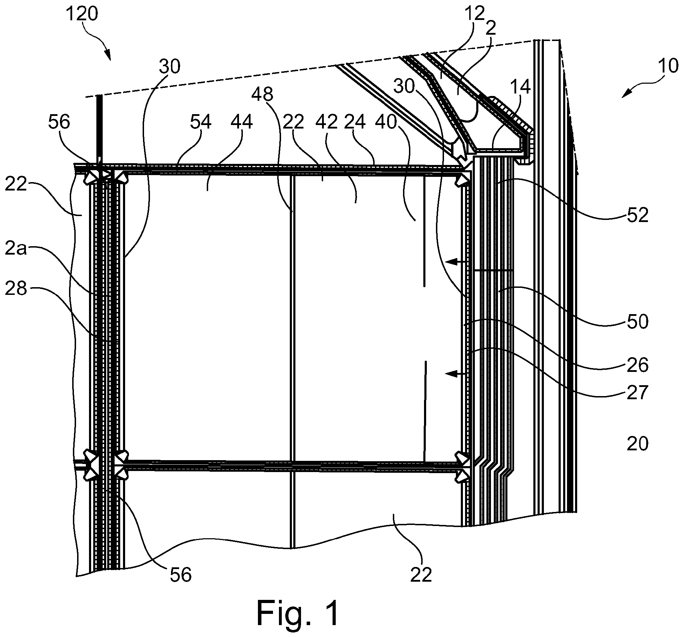

A part of a plant 10 for the treatment of waste water 2 is schematically shown in fig. 1. The waste water 2 which could be produced water from an oil field, is guided to the plant 10 by a feeding duct/ channel 12. From centralized weir gates 14 the water 2 from the feeding duct/ channel 12 flows into inlet distribution channels 52 of a distribution system 50. At least one inlet distribution channel 52 is provided for the first constructed wetland basins 22 of a constructed wetland area 20. The constructed wetland area 20 comprises a plurality of constructed wetland basins 22 being arranged in parallel and in series.

Each constructed wetland basin 22 has a substantially rectangular shape with longitudinal sides 24 being parallel to the direction of flow of water 2 and broad sides 26 being transverse or orthogonal to the longitudinal sides 24. From a particular inlet channel 52, the waste water 2 flows via a plurality of inlet openings 27 which can be closed into the inlet portion of the constructed wetland basin 22. At an outlet portion 28 an interchange channel 56 along the broad side of the constructed wetland basin 22 can be used to collect the water 2 flowing out of the wetland basins 22.

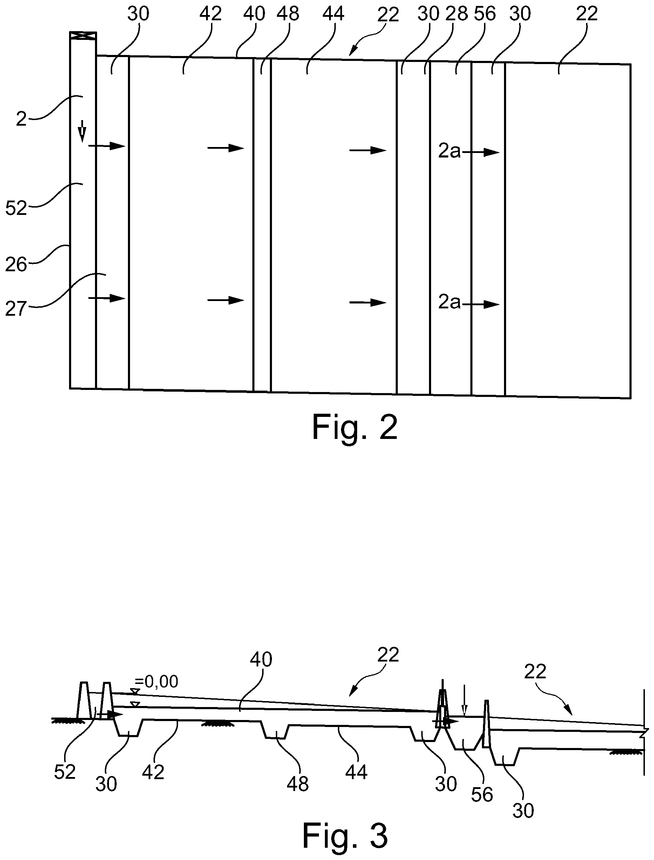

The design and the operation of one particular constructed wetland basins 22 according to the invention is further shown in the figures 2 and 3. From the inlet distribution channel 52 the water 2 flows uniformly via several inlet openings into an initial calming zone 30 of the constructed wetland basin 22. From the calming zone 30 the water flows into a wetland zone 40, which is provided with known wetland plants being able to support microbial growth to reduce the content of oil in the water 2.

As is clearly shown in the cross section according to fig. 3, the calming zone 30 is designed as an elongated channel along the broad side 26 with a greater depth than the foregoing inlet distribution channel 52 and the adjacent area of the wetland zone 40. By this design of the calming zone 30, the velocity of the flow of water 2 is reduced. Furthermore, the water 2 is enabled to flow in a transverse direction along the broad side 26 leading to a certain intermixing of the water 2 within the calming zone 30. Moreover, the stream of water 2 flowing into the constructed wetland basin 22 is equalized achieving a uniform distribution of the flow across the full breadth of the wetland basin 27 and more gentle for the soil structure and the wetland plants in the following wetland zone 40.

According to another aspect of the invention, the wetland zone 40 is divided in at least one upstream terrace 42 and at least one downstream terrace 44 being separated by a channel-like intermediate calming zone 48. It has to be mentioned that the ground level of the downstream terrace 44 is at a lower elevation than the ground level of the upstream terrace 42, wherein a stepped arrangement is established. By this stepped arrangement a uniform gentle flow of water 2 through the wetland zone 40 is further enhanced.

Furthermore, the ground level of the intermediate calming zone 48 between the upstream terrace 42 and the downstream terrace 44 is deeper than the ground level of both terraces 42, 44. Due to this channel-like deepening, again an additional calming and intermixing of the water 2 to be treated between the upstream terrace 42 and the downstream terrace 44 is achieved.

At the outlet portion 28 of the first constructed wetland basin 22 an additional calming zone 30 can be provided. This calming zone 30 at the outlet portion 28 is deeper than the ground level of the adjacent upstream wetland terrace 44. This outlet calming zone 30 leads to a similar effect regarding the calming and equalizing of the flow of water 2 as the first initial calming zone 30 at the inlet portion 27. In a serial arrangement of constructed wetland basins 22, the outflow of a first constructed wetland basin 22 can be introduced into a following constructed wetland basin 22 as is schematically shown in the figures 1 to 3.

Between these adjacent constructed wetland basins 22 an interchange channel 56 can be arranged. The interchange channel 56 is directed along the broad sides 26 of one or more parallel constructed wetland basins adjacent to the outlet portion 28, thus allowing an intermixing of treated water 2a from several parallel constructed wetland basins 22 before introducing the treated water 2a being equalized in quality into subsequent constructed wetland basins 22 with a calming zone 30.

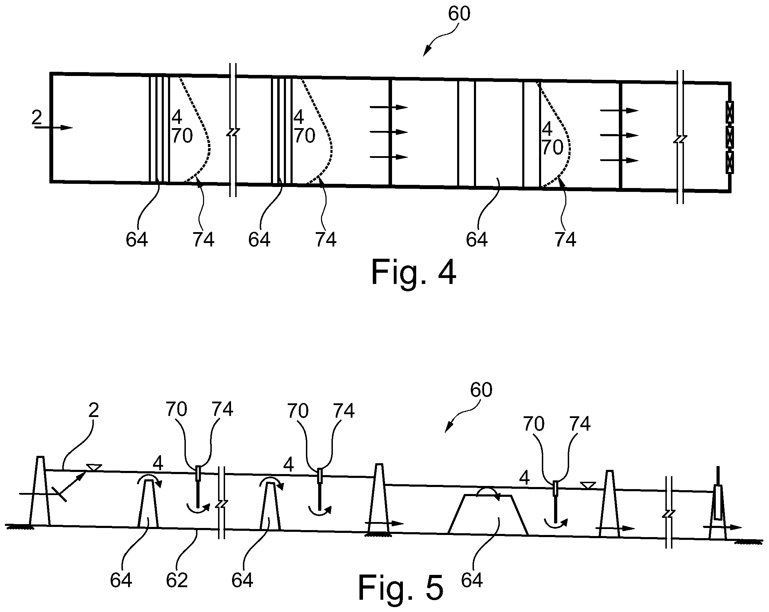

In the figures 4 and 5 a skimming channel 60 is shown, which could be part of the feeding duct 12 of the plant 10 being described in connection with figures 1 to 3. In particular, the skimming channel 60 can be arranged in an inlet area as part of the feeding duct 12 before the distribution system 50 of the constructed wetland basins 22.

The skimming channel 60 comprises a bottom 62 with water levels that allow for a flow with low velocities on which one or more underwater bunds 64 are provided. The underwater bunds 64 locally reduce the cross section of the oil skimming channel 60, causing a sudden increase in the flow velocity, which itself causes a local decrease in the water surface elevation. Furthermore, in the surface area of the water 2 eddies are created within the water 2 due to the sudden reduction of the flow velocities bringing the oil droplets together. The sudden decrease in velocity leads to a collision of oil droplets in the water 2. Due to the collision of the oil droplets the water surface tension of the small oil droplets is broken and the droplets coalesce together to form an oil blanket immediately after the underwater bund 64. The formation of an oil blanket is further enhanced by the arrangement of a baffle 74 floating at the surface of the water 2 which keeps the oil blanket stationary supporting the coalescing of the oil droplets through the collision and eddy action and facilitating the removal of the oil blanket by way of skimming. At the baffle 74, skimming means 70 can be arranged for skimming off the oil blanket from the water 2.

By the arrangement of additional following underwater bunds 64, this cleaning and skimming can be repeated. By this oil skimming channel 60, a desired pre-treatment of the water 2 with a significant reduction of the oil content can be achieved, in particular before the water 2 to be treated flows into constructed wetland basins 22 with wetland plants.

## Claims

1. Plant for treatment of waste water containing oil, comprising
a feeding duct (12) for supplying the waste water (2),
a constructed wetland area (20) having at least one constructed wetland basin (22) with wetland plants for treating the water (2) flowing through the constructed wetland basin (22) in a longitudinal direction,
wherein the constructed wetland basin (22) comprises a fundamentally rectangular shape integrated in a natural or artificial topography with longitudinal sides (24) in the longitudinal direction and broad sides (26) in a direction transverse to the flow direction,
whereby
at least one constructed wetland basin (22) comprises at least one calming zone (30) along at least one of the broad sides (26) of the at least one constructed wetland basin (22), the calming zone (30) being deeper than an adjacent wetland zone (40) with the wetland plants.

2. Plant according to claim 1,
**characterized in that**,
the calming zone (30) is arranged at an upstream inlet portion and/or at a downstream outlet portion of the at least one constructed wetland basin (22).

3. Plant according to claim 1 or 2,
**characterized in that**,
the constructed wetland area (20) comprises a plurality of constructed wetland basins (22) being arranged in parallel and/or in series.

4. Plant according to any one of the claims 1 to 3,
**characterized in that**,
the wetland zone (40) comprises at least two serial wetland terraces (42, 44) being arranged with different ground levels, and
between two adjacent wetland terraces (42, 44) an intermediate calming zone (48) is arranged, the intermediate calming zone (48) being deeper than the two adjacent wetland terraces (42, 44).

5. Plant according to any one of the claims 1 to 4,
**characterized in that**,
the feeding duct (12) leads to centralized weir gates (14), from which the water (2) is guided to the constructed wetland basins (22) by a distribution system (50).

6. Plant according to claim 5,
**characterized in that**,
the distribution system comprises distribution channels (52) being connected with the constructed wetland area (20).

7. Plant according to any one of the claims 1 to 6,
**characterized in that**,
in an arrangement of a plurality of constructed wetland basins (22) lateral distribution ducts (54) are provided in the direction of flow and/or transverse to the direction of flow for enabling an equal distribution and an interchange of the water (2) between the individual constructed wetland basins (22).

8. Plant according to any one of the claims 1 to 7,
**characterized in that**,
at least one distribution channel is designed as an interchange channel (56) collecting and mixing the outflow of several parallel constructed wetland basins (22).

9. Plant according to any one of the claims 1 to 8,
**characterized in that**,
at least one channel (60) with at least one skimming means (70) for skimming oil from the surface of the water (2) at a defined position along the channel (60) is provided,
wherein in the direction of flow in front of the at least one skimming means (70) at the bottom (62) of the channel (60) at least one underwater bund (64) is arranged transversely to the direction of flow, the underwater bund (64) being adapted to locally reduce the cross section of the channel (60) and to locally increase the velocity of flow.

10. Plant according to claim 9,
**characterized in that**,
downstream of the underwater bund (64), where an oil blanket can form, a baffle (74) is arranged to retain the oil blanket, and between the underwater bund (64) and the baffle (74) the skimming means (70) is arranged to remove accumulated oil.

11. Method for treatment of waste water, in particular produced water containing oil, by means of a plant (10) according to any one of the claims 1 to 10, with the steps of:
supplying the waste water (2) by a feeding duct (12) to a constructed wetland area (20),
flowing the water (2) through the constructed wetland area (20) having at least one constructed wetland basin (22) with wetland plants in a longitudinal direction, wherein the basin (22) comprises a fundamentally rectangular shape with longitudinal sides (24) in a longitudinal direction and broad sides (26) in a transverse direction,
**characterized in that**,
the at least one constructed wetland basin (22) comprises at least one calming zone (30) along at least one broad side (26) of the at least one constructed wetland basin (22), the calming zone (30) being deeper than the adjacent wetland zone (40) with the wetland plants, wherein the velocity of flow of water is reduced in the calming zone (30).

12. Method according to claim 11,
**characterized in that**,
the velocity of flow is reduced by a first calming zone (30) at an upstream inlet portion (27) of the constructed wetland basin (22).

13. Method according to claim 11 or 12,
**characterized in that**,
the wetland zone (40) comprises at least two serial wetland terraces (42, 44) being arranged with different ground levels, wherein the flow of water (2) between both terraces (42, 44) is reduced by an intermediate calming zone (48) between the terraces (42, 44), wherein the intermediate calming zone (48) is deeper than the two adjacent wetland terraces (42, 44).

14. Method according to any one of the claims 11 to 13,
**characterized in that**,
a plurality of constructed wetland basins (22) with lateral distribution ducts (54) are provided in the direction of flow and/or transverse to the direction of flow, by which the water (2) is equally distributed and interchanged between the individual constructed wetland basins (22).

15. Method according to any one of the claims 11 to 14,
**characterized in that**,
comprising the steps of:
providing a stream of water (2) to be treated in an elongated channel (60),
skimming oil from the surface of the water (2) at least one defined position along the channel (60) by at least one skimming means (70), and
locally increasing the velocity of flow by an underwater bund (64) being arranged transversely to the direction of flow and in front of the at least one skimming means (70) in the direction of flow, wherein droplets of oil in the water (2) are collided and coalesced, forming a floating blanket of oil (4) at the surface of the water (2).

## Patentansprüche

1. Anlage zur Aufbereitung von Abwasser, das Öl enthält, mit
einem Zulaufkanal (12) zur Zuführung des Abwassers (2),
einem angelegten Feuchtgebiet (20) mit mindestens einem angelegten Feuchtgebietsbecken (22) mit Feuchtgebietspflanzen zum Aufbereiten des Wassers (2), das in Längsrichtung durch das angelegte Feuchtgebietsbecken (22) fließt, wobei das angelegte Feuchtgebietsbecken (22) eine grundsätzlich rechteckige Form aufweist, die in ein natürliches oder künstliches Gelände integriert ist, mit Längsseiten (24) in Längsrichtung und Breitseiten (26) in einer Richtung quer zur Strömungsrichtung,
wobei
mindestens ein angelegtes Feuchtgebietsbecken (22) mindestens eine Beruhigungszone (30) entlang mindestens einer der Breitseiten (26) des mindestens einen angelegten Feuchtgebietsbeckens (22) aufweist, wobei die Beruhigungszone (30) tiefer liegt als eine angrenzende Feuchtgebietszone (40) mit den Feuchtgebietspflanzen.

2. Anlage nach Anspruch 1,
**dadurch gekennzeichnet, dass**
die Beruhigungszone (30) an einem stromaufwärtigen Einlassabschnitt und/oder an einem stromabwärtigen Auslassabschnitt des mindestens einen angelegten Feuchtgebietsbeckens (22) angeordnet ist.

3. Anlage nach Anspruch 1 oder 2,
**dadurch gekennzeichnet, dass**
der angelegte Feuchtgebietsbereich (20) eine Mehrzahl von angelegten Feuchtgebietsbecken (22) aufweist, die parallel und/oder in Reihe angeordnet sind.

4. Anlage nach einem der Ansprüche 1 bis 3,
**dadurch gekennzeichnet, dass**
die Feuchtgebietszone (40) mindestens zwei serielle Feuchtgebietsterrassen (42, 44) aufweist, die mit unterschiedlichen Bodenniveaus angeordnet sind, und
zwischen zwei benachbarten Feuchtgebietsterrassen (42, 44) eine Zwischenberuhigungszone (48) angeordnet ist, wobei die Zwischenberuhigungszone (48) tiefer liegt als die beiden angrenzenden Feuchtgebietsterrassen (42, 44).

5. Anlage nach einem der Ansprüche 1 bis 4,
**dadurch gekennzeichnet, dass**
die Zuführleitung (12) zu zentralen Wehrverschlüssen (14) führt, von denen das Wasser (2) zu den angelegten Feuchtgebietsbecken (22) durch ein Verteilungssystem (50) geleitet wird.

6. Anlage nach Anspruch 5,
**dadurch gekennzeichnet, dass**
das Verteilungssystem Verteilungskanäle (52) aufweist, die mit dem angelegten Feuchtgebiet (20) verbunden sind.

7. Anlage nach einem der Ansprüche 1 bis 6,
**dadurch gekennzeichnet, dass**
bei einer Anordnung mehrerer angelegter Feuchtgebietsbecken (22) seitliche Verteilerkanäle (54) in Strömungsrichtung und/oder quer zur Strömungsrichtung vorgesehen sind, um eine gleichmäßige Verteilung und einen Austausch des Wassers (2) zwischen den einzelnen angelegten Feuchtgebietsbecken (22) zu ermöglichen.

8. Anlage nach einem der Ansprüche 1 bis 7,
**dadurch gekennzeichnet, dass**
mindestens ein Verteilerkanal als Austauschkanal (56) ausgebildet ist, der den Abfluss mehrerer parallel angelegter Feuchtgebietsbecken (22) sammelt und vermischt.

9. Anlage nach einem der Ansprüche 1 bis 8,
**dadurch gekennzeichnet, dass**
mindestens ein Kanal (60) mit mindestens einer Abschöpfeinrichtung (70) zum Abschöpfen von Öl von der Wasseroberfläche (2) an einer definierten Position entlang des Kanals (60) vorgesehen ist,
wobei in Strömungsrichtung vor der mindestens einen Abschöpfeinrichtung (70) am Boden (62) des Kanals (60) mindestens ein Unterwasserwall (64) quer zur Strömungsrichtung angeordnet ist, wobei der Unterwasserwall (64) ausgelegt ist, um den Querschnitt des Kanals (60) lokal zu verringern und die Strömungsgeschwindigkeit lokal zu erhöhen.

10. Anlage nach Anspruch 9,
**dadurch gekennzeichnet, dass**
stromabwärts des Unterwasserwalls (64), wo sich eine Ölschicht bilden kann, eine Prallwand (74) zum Zurückhalten der Ölschicht angeordnet ist, und zwischen dem Unterwasserwall (64) und der Prallwand (74) die Abschöpfeinrichtung (70) angeordnet ist, um angesammeltes Öl zu entfernen.

11. Verfahren zur Behandlung von Abwasser, insbesondere ölhaltiges Produktionswasser, mittels einer Anlage (10) nach einem der Ansprüche 1 bis 10, mit den Schritten:
Zuführen des Abwassers (2) über einen Zuführkanal (12) zu einem angelegten Feuchtgebiet (20),
Fließen des Wassers (2) durch das angelegte Feuchtgebiet (20) mit mindestens einem angelegten Feuchtgebietsbecken (22) mit Feuchtgebietspflanzen in Längsrichtung,
wobei das Becken (22) eine grundsätzlich rechteckige Form mit Längsseiten (24) in einer Längsrichtung und Breitseiten (26) in einer Querrichtung aufweist, **dadurch gekennzeichnet, dass**
das mindestens eine angelegte Feuchtgebietsbecken (22) entlang mindestens einer Breitseite (26) des mindestens einen angelegten Feuchtgebietsbeckens (22) mindestens eine Beruhigungszone (30) aufweist, wobei die Beruhigungszone (30) tiefer liegt als die angrenzende Feuchtgebietszone (40) mit den Feuchtgebietspflanzen, wobei in der Beruhigungszone (30) die Strömungsgeschwindigkeit des Wassers verringert ist.

12. Verfahren nach Anspruch 11,
**dadurch gekennzeichnet, dass**
die Strömungsgeschwindigkeit durch eine erste Beruhigungszone (30) an einem stromaufwärts gelegenen Einlassabschnitt (27) des angelegten Feuchtgebietsbeckens (22) verringert wird.

13. Verfahren nach Anspruch 11 oder 12,
**dadurch gekennzeichnet, dass**
die Feuchtgebietszone (40) mindestens zwei serielle Feuchtgebietsterrassen (42, 44) aufweist, die mit unterschiedlichen Bodenniveaus angeordnet sind, wobei der Wasserfluss (2) zwischen beiden Terrassen (42, 44) durch eine Zwischenberuhigungszone (48) zwischen den Terrassen (42, 44) vermindert wird, wobei die Zwischenberuhigungszone (48) tiefer liegt als die beiden angrenzenden Feuchtgebietsterrassen (42, 44).

14. Verfahren nach einem der Ansprüche 11 bis 13,
**dadurch gekennzeichnet, dass**
in Strömungsrichtung und/oder quer zur Strömungsrichtung mehrere angelegte Feuchtgebietsbecken (22) mit seitlichen Verteilkanälen (54) vorgesehen werden, wodurch das Wasser (2) gleichmäßig zwischen den einzelnen angelegten Feuchtgebietsbecken (22) verteilt und ausgetauscht wird.

15. Verfahren nach einem der Ansprüche 11 bis 14,
**dadurch gekennzeichnet, dass**
es die folgenden Schritte aufweist:
Bereitstellen eines zu behandelnden Wasserstroms (2) in einem länglichen Kanal (60),
Abschöpfen von Öl von der Oberfläche des Wassers (2) an mindestens einer definierten Stelle entlang des Kanals (60) durch mindestens eine Abschöpfeinrichtung (70), und
lokales Erhöhen der Strömungsgeschwindigkeit, indem quer zur Strömungsrichtung und in Strömungsrichtung vor der mindestens einen Abschöpfeinrichtung (70) ein Unterwasserwall (64) angeordnet wird, wobei Öltröpfchen im Wasser (2) kollidieren und verschmelzen, wodurch sich eine schwimmende Ölschicht (4) an der Wasseroberfläche (2) bildet.

## Revendications

1. Installation de traitement d'eau usée contenant du pétrole, comprenant
une canalisation d'alimentation (12) destinée à alimenter l'eau usée (2),
une aire de terre humide construite (20) comportant au moins un bassin de terre humide construit (22) comportant des plantes de terre humide destinées à traiter l'eau (2) s'écoulant à travers le bassin de terre humide construit (22) dans une direction longitudinale,
dans laquelle le bassin de terre humide construit (22) a une forme fondamentalement rectangulaire intégrée dans une topographie naturelle ou artificielle avec des côtés longitudinaux (24) dans la direction longitudinale et des côtés larges (26) dans une direction transversale au sens d'écoulement,
ce par quoi
au moins un bassin de terre humide construit (22) comprend au moins une zone de tranquillisation (30) le long d'au moins l'un des côtés larges (26) de l'au moins un bassin de terre humide construit (22), la zone de tranquillisation (30) étant plus profonde qu'une zone de terre humide adjacente (40) comportant les plantes de terre humide.

2. Installation selon la revendication 1,
**caractérisée en ce que**,
la zone de tranquillisation (30) est disposée au niveau d'une partie d'entrée amont et/ou au niveau d'une partie de sortie aval de l'au moins un bassin de terre humide construit (22).

3. Installation selon la revendication 1 ou la revendication 2,
**caractérisée en ce que**,
l'aire de terre humide construite (20) comprend une pluralité de bassins de terre humide construits (22) qui sont disposés en parallèle et/ou en série.

4. Installation selon l'une quelconque des revendications 1 à 3,
**caractérisée en ce que**,
la zone de terre humide (40) comprend au moins deux terrasses de terre humide en série (42, 44) qui sont conçues avec des niveaux de terre différents, et
une zone de tranquillisation intermédiaire (48) est disposée entre deux terrasses de terre humide adjacentes (42, 44), la zone de tranquillisation intermédiaire (48) étant plus profonde que les deux terrasses de terre humide adjacentes (42, 44).

5. Installation selon l'une quelconque des revendications 1 à 4,
**caractérisée en ce que**,
la canalisation d'alimentation (12) conduit à des portes de déversoir centralisées (14), à partir desquelles l'eau (2) est guidée vers les bassins de terre humide construits (22) par un système de distribution (50).

6. Installation selon la revendication 5,
**caractérisée en ce que**,
le système de distribution comprend des canaux de distribution (52) qui sont reliés à l'aire de terre humide construite (20).

7. Installation selon l'une quelconque des revendications 1 à 6,
**caractérisée en ce que**,
dans une disposition d'une pluralité de bassins de terre humide construits (22), des canalisations de distribution latérales (54) sont disposées dans le sens d'écoulement et/ou dans le direction transversale au sens d'écoulement pour permettre une distribution égale et un échange de l'eau (2) entre les bassins de terre humide construits individuels (22).

8. Installation selon l'une quelconque des revendications 1 à 7,
**caractérisée en ce que**,
au moins un canal de distribution est conçu en tant que canal d'échange (56) collectant et mélangeant le flux sortant de plusieurs bassins de terre humide construits parallèles (22).

9. Installation selon l'une quelconque des revendications 1 à 8,
**caractérisée en ce que**,
au moins un canal (60) doté d'au moins un moyen d'écrémage (70) destiné à écrémer du pétrole de la surface de l'eau (2) à une position définie le long du canal (60) est prévu,
dans laquelle dans le sens d'écoulement devant l'au moins un moyen d'écrémage (70) au niveau du fond (62) du canal (60), au moins une digue immergée (64) est disposée transversalement au sens d'écoulement, la digue immergée (64) étant conçue pour réduire localement la section transversale du canal (60) et pour augmenter localement la vitesse d'écoulement.

10. Installation selon la revendication 9,
**caractérisée en ce que**,
en aval de la digue immergée (64), à l'endroit où peut se former un voile de pétrole, une chicane (74) est disposée pour retenir le voile de pétrole, et le moyen d'écrémage (70) est disposé entre la digue immergée (64) et la chicane (74) pour retirer le pétrole accumulé.

11. Procédé de traitement d'eau usée, en particulier d'eau produite contenant du pétrole, au moyen d'une installation (10) selon l'une quelconque des revendications 1 à 10, comprenant les étapes consistant à :
alimenter l'eau usée (2) par une canalisation d'alimentation (12) jusqu'à une aire de terre humide construite (20),
amener l'eau (2) à s'écouler à travers l'aire de terre humide construite (20) comportant au moins un bassin de terre humide construit (22) comportant des plantes de terre humide dans une direction longitudinale,
dans lequel le bassin (22) a une forme fondamentalement rectangulaire avec des côtés longitudinaux (24) dans une direction longitudinale et des côtés larges (26) dans une direction transversale,
**caractérisé en ce que**,
l'au moins un bassin de terre humide construit (22) comprend au moins une zone de tranquillisation (30) le long d'au moins un côté large (26) de l'au moins un bassin de terre humide construit (22), la zone de tranquillisation (30) étant plus profonde que la zone de terre humide adjacente (40) comportant les plantes de terre humide, dans lequel la vitesse d'écoulement d'eau est réduite dans la zone de tranquillisation (30).

12. Procédé selon la revendication 11,
**caractérisé en ce que**,
la vitesse d'écoulement est réduite par une première zone de tranquillisation (30) au niveau d'une partie d'entrée amont (27) du bassin de terre humide construit (22) .

13. Procédé selon la revendication 11 ou la revendication 12,
**caractérisé en ce que**,
la zone de terre humide (40) comprend au moins deux terrasses de terre humide en série (42, 44) qui sont conçues avec des niveaux de terre différents, dans lequel l'écoulement d'eau (2) entre les deux terrasses (42, 44) est réduit par une zone de tranquillisation intermédiaire (48) entre les terrasses (42, 44), dans lequel la zone de tranquillisation intermédiaire (48) est plus profonde que les deux terrasses de terre humide adjacentes (42, 44).

14. Procédé selon l'une quelconque des revendications 11 à 13,
**caractérisé en ce que**,
les bassins d'une pluralité de bassins de terre humide construits (22) dotés de canalisations de distribution latérales (54) sont disposés dans le sens d'écoulement et/ou dans la direction transversale au sens d'écoulement, par lesquelles l'eau (2) est distribuée de manière égale et échangée entre les bassins de terre humide construits individuels (22).

15. Procédé selon l'une quelconque des revendications 11 à 14,
**caractérisé en ce que**,
le procédé comprend les étapes consistant à :
amener un courant d'eau (2) à traiter dans un canal allongé (60),
écrémer du pétrole de la surface de l'eau (2) à au moins une position définie le long du canal (60) par au moins un moyen d'écrémage (70), et
augmenter localement la vitesse d'écoulement par une digue immergée (64) qui est disposée transversalement au sens d'écoulement et devant l'au moins un moyen d'écrémage (70) dans le sens d'écoulement, dans lequel des gouttelettes de pétrole dans l'eau (2) entrent en collision et en coalescence, formant un voile flottant de pétrole (4) au niveau de la surface de l'eau (2).
